# EUROPEAN PATENT APPLICATION

(11) **EP 4 852 079 A1**
(43) Date of publication of application: **09.12.2026**
(21) Application number: 26181295.2
(22) Date of filing: 27.05.2026
(51) Int. Cl.: H01M 4/139, H01M 4/04, H01M 4/13, H01M 10/052, H01M 50/59

(54) **ELECTRODE FOR SECONDARY BATTERY AND MANUFACTURING APPARATUS AND METHOD THEREOF**

(30) Priority: 05.06.2025 KR 20250073714
(71) Applicant: SAMSUNG SDI CO., LTD., Yongin-si, Gyeonggi-do 17084 (KR)
(72) Inventor: JO, Jaeho, 17084 Yongin-Si (KR); KIM, Minsic, 17084 Yongin-si (KR); JEONG, Deokhoon, 17084 Yongin-si (KR); JUNG, Sungmin, 17084 Yongin-si (KR); LEE, Donggeun, 17084 Yongin-Si (KR)
(74) Representative: Marks & Clerk LLP

(57) **Abstract**

An electrode for a secondary battery, and a method and apparatus for manufacturing a secondary battery are described. The electrode for a secondary battery includes a current collector, an active material layer arranged on the current collector, and an insulating portion in contact with a side of the active material layer, wherein the insulating portion includes a first insulating layer having a first ceramic concentration and in contact with the active material layer, and a second insulating layer having a second ceramic concentration different from the first ceramic concentration and in contact with the first insulating layer.

## Description

### FIELD

The embodiments relate to an electrode for a secondary battery, and a manufacturing apparatus and method thereof.

### BACKGROUND

Secondary batteries are batteries that may be charged and discharged, unlike primary batteries that are not rechargeable. Low-capacity secondary batteries are used in small portable electronic devices such as smartphones, feature phones, laptop computers, digital cameras, and camcorders, while large-capacity secondary batteries are widely used as power sources for driving motors in hybrid and electric vehicles and as power storage batteries. These secondary batteries include an electrode assembly comprising a positive electrode and a negative electrode, a case accommodating the electrode assembly, and electrode terminals connected to the electrode assembly.

An electrode such as a positive electrode or a negative electrode is coated with an active material slurry containing an active material and a binder on a current collector, and an insulating member is coated thereon to prevent a short circuit caused by the active material slurry. In addition, the insulating member formed at the end of the electrode plays an important role in ensuring not only insulation performance but also alignment accuracy in the electrode manufacturing process, cross-sectional quality after cutting, and assembly reliability.

Therefore, the shape, material, thickness, and arrangement structure of the insulating member are considered key technological elements for securing the performance and stability of the battery.

### SUMMARY

An electrode for a secondary battery according to aspects of the disclosure includes a current collector, an active material layer arranged on the current collector, and an insulating portion in contact with a side of the active material layer, wherein the insulating portion includes a first insulating layer having a first ceramic concentration and in contact with the active material layer, and a second insulating layer having a second ceramic concentration different from the first ceramic concentration and in contact with the first insulating layer.

In some embodiments, the second ceramic concentration may be greater than the first ceramic concentration.

In some embodiments, the width of the first insulating layer may be greater than the width of the second insulating layer.

In some embodiments, the thickness of the first insulating layer may be less than the width of the first insulating layer.

In some embodiments, the thickness of the second insulating layer may be less than the width of the second insulating layer.

In some embodiments, the second insulating layer may cover one side of the first insulating layer.

In some embodiments, the thickness of the first insulating layer and the thickness of the second insulating layer may be less than the thickness of the active material layer.

A method of manufacturing an electrode for a secondary battery according to aspects of the disclosure includes transporting a current collector on which an active material layer is arranged, and arranging an insulating portion in contact with a side of the active material layer, wherein arranging the insulating portion includes forming a first insulating layer in contact with a side of the active material layer by applying, on the current collector, a first insulating member having a first ceramic concentration, and forming a second insulating layer in contact with the first insulating layer by applying, on the current collector, a second insulating member having a second ceramic concentration different from the first ceramic concentration.

In some embodiments, the second ceramic concentration may be greater than the first ceramic concentration.

In some embodiments, forming the first insulating layer may include obtaining active material image information on the shape of the active material layer and applying, based on the active material image information, the first insulating member on the current collector such that the first insulating layer comes into contact with the side of the active material layer.

In some embodiments, in applying the first insulating member, the first insulating member may be applied on the current collector based on the active material image information such that the thickness of the first insulating layer is smaller than the thickness of the active material layer.

In the embodiments, forming the second insulating layer may include obtaining insulation image information on the shape of the first insulating layer and applying, based on the insulation image information, the second insulating member on the current collector such that the second insulating layer comes into contact with the first insulating layer.

In some embodiments, in applying the second insulating member, the second insulating member may be applied on the current collector based on the insulation image information such that the width of the second insulating layer is less than the width of the first insulating layer.

In some embodiments, in applying the second insulating member, the second insulating member may be applied on the current collector based on the insulation image information such that the second insulating layer covers one side of the first insulating layer.

A manufacturing apparatus for an electrode for a secondary battery according to aspects of the disclosure includes a conveying unit configured to transport a current collector having an active material layer arranged on one surface thereof in one direction, an insulating coater unit configured to form an insulating portion on the current collector to contact a side of the active material layer, an active material photographing unit configured to obtain active material image information on the shape of the active material layer, and a control unit configured to control the position of the insulating coater unit based on the active material image information such that the insulating portion comes into contact with the side of the active material layer. The insulating coater unit includes a first insulating coater for forming a first insulating layer in contact with an edge of the active material layer by applying, on the current collector, a first insulating member having a first ceramic concentration, and a second insulating coater for forming a second insulating layer in contact with the first insulating layer by applying, on the current collector, a second insulating member having a second ceramic concentration different from the first ceramic concentration.

In some embodiments, the second ceramic concentration may be greater than the first ceramic concentration.

In some embodiments, the second insulating coater may apply the second insulating member on the current collector such that the width of the second insulating layer is less than the width of the first insulating layer.

In some embodiments, the control unit may be further configured to control the position of the first insulating coater based on the active material image information such that the first insulating layer comes into contact with the active material layer.

In some embodiments, the first insulating coater may be arranged upstream of the second insulating coater with respect to the transport direction of the current collector.

In some embodiments, the manufacturing apparatus for an electrode for a secondary battery may further include an insulating layer photographing unit configured to obtain insulation image information for the first insulating layer, wherein the control unit may be further configured to control the position of the second insulating coater based on the insulation image information such that the second insulating layer comes into contact with the first insulating layer.

At least some of the above and other features of the invention are set out in the claims.

### BRIEF DESCRIPTION OF THE DRAWINGS

The above and other aspects, features, and advantages of certain embodiments of the disclosure will be more apparent from the following description taken in conjunction with the accompanying drawings in which:
FIG. 1 is a view illustrating a secondary battery including an electrode for a secondary battery according to embodiments of the disclosure;
FIG. 2 is a perspective view illustrating an electrode for a secondary battery of FIG. 1;
FIG. 3 is a cross-sectional view taken along line I-I' of FIG. 2;
FIG. 4 is a cross-sectional view, taken along line I-I' of FIG. 2, of an electrode for a secondary battery according to embodiments of the disclosure;
FIG. 5 is a view illustrating a manufacturing apparatus for an electrode for a secondary battery according to embodiments of the disclosure;
FIG. 6 is a schematic view illustrating the manufacturing apparatus of FIG. 5;
FIG. 7 is a view illustrating a partial configuration of a manufacturing apparatus for an electrode for a secondary battery according to embodiments of the disclosure;
FIG. 8 is a view illustrating another partial configuration of the manufacturing apparatus for an electrode for a secondary battery according to embodiments of the disclosure;
FIG. 9 is experimental data showing cut-surface quality according to the concentration of ceramic included in the electrode for a secondary battery;
FIG. 10 is a view illustrating a method of manufacturing an electrode for a secondary battery according to embodiments of the disclosure;
FIG. 11 is a view illustrating some steps of FIG. 10 in detail; and
FIG. 12 is a view illustrating other steps of FIG. 10 in detail.

### DETAILED DESCRIPTION

Hereinafter, preferred embodiments of the disclosure will be described in detail with reference to the accompanying drawings. Prior to this, the terms or words used in this specification and the claims should not be interpreted as limited to their usual or dictionary meanings, and should be interpreted as meanings and concepts that conform to the technical idea of the disclosure based on the principle that an inventor may appropriately define the concept of a term to explain the disclosure in the best manner. Therefore, it should be understood that the embodiments described in this specification and the components illustrated in the drawings are only some preferred embodiments of the disclosure and do not represent all of the technical ideas of the disclosure, and that various equivalents and modifications may exist that may replace them as of the filing date of this application.

Additionally, when used herein, the terms "comprise," "include," and/or "comprising" or "including," specify the presence of stated features, numbers, steps, operations, elements, elements, and/or groups thereof, but do not preclude the presence or addition of one or more other features, numbers, operations, elements, elements, and/or groups thereof.

Additionally, to aid understanding of the disclosure, the attached drawings are not drawn to scale and the dimensions of some components may be exaggerated. Additionally, the same reference numerals may be assigned to the same components in different embodiments.

When two items are described as being "the same," this means that they are "substantially the same." Therefore, substantial equivalence may include deviations that are considered insignificant in the art, for example, deviations of less than 5%. Additionally, uniformity of a parameter over a given region may mean uniformity from an average perspective.

Although the terms first, second, etc. are used to describe various components, these components are not limited by these terms. These terms are used only to distinguish one component from another, and unless otherwise stated, it is understood that a first component may also be a second component.

Throughout the specification, unless otherwise specifically stated, each element may be singular or plural.

When a component is described as being arranged "on" (or "under") another component, this may mean not only that the component is arranged in direct contact with the upper (or lower) surface of the component, but also that one or more intervening components may be arranged therebetween.

Additionally, when it is described that a component is "connected" or "coupled" to another component, this should be understood to include not only cases where the components are directly connected or coupled, but also cases where one or more other components are "interposed" therebetween, or the components are "connected" or "coupled" via another component. Additionally, when a component is described as being electrically coupled to another component, this includes both cases in which the components are directly electrically coupled and cases in which the components are electrically coupled with another element interposed therebetween.

Whenever reference is made throughout the specification to "A and/or B," this means A, B or A and B, unless otherwise specified. That is, "and/or" includes all or any combination of the listed items. When reference is made to "C to D", this means C or more and D or lower, unless otherwise stated.

The terminology used herein is for the purpose of describing embodiments of the disclosure and is not intended to be limiting of the disclosure.

The embodiments aim to improve the stability of an electrode by insulating an active material layer using an insulating portion including a first insulating layer and a second insulating layer, and to reduce the risk of damage to the insulating layers or short circuit that may occur during a cutting process.

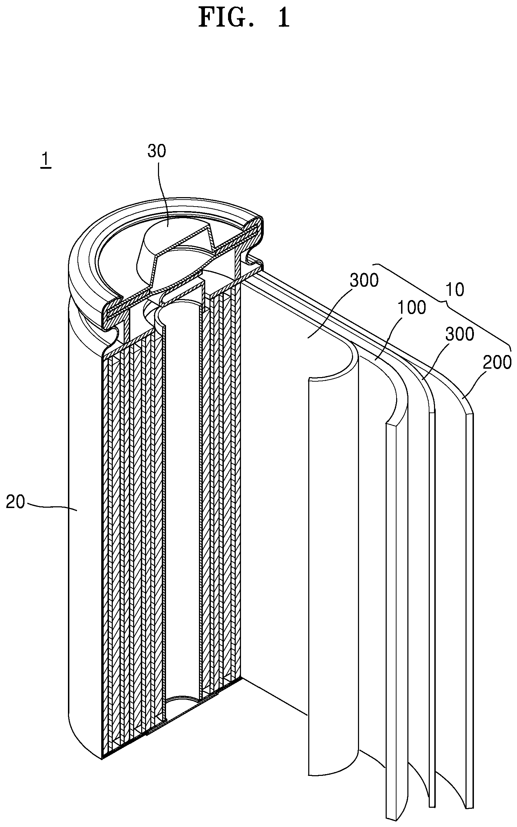

FIG. 1 is a view illustrating a secondary battery including an electrode for a secondary battery according to embodiments of the disclosure.

Referring to FIG. 1, a secondary battery 1 according to embodiments of the disclosure may store electrical energy internally and supply power to an external component that is electrically connected.

In embodiments, the secondary battery 1 may include an electrode assembly 10, a case 20, and a cap 30.

In the electrode assembly 10, a charge/discharge reaction of the secondary battery 1 may occur. The electrode assembly 10 may include an electrode and a separator 300 for a secondary battery.

The electrode assembly 10 may include a pair of electrodes for a secondary battery. The electrode assembly 10 may include a first electrode 100 and a second electrode 200.

The first electrode 100 may be one of a positive electrode and a negative electrode, and the second electrode 200 may be the other electrode. That is, the electrode assembly 10 may be configured such that the positive and negative electrodes are arranged to face each other, allowing movement of ions through an electrolyte or separator. Thus, charging and discharging may be achieved by inducing an electrochemical reaction inside the secondary battery 1.

The first electrode 100 and the second electrode 200 may have structures corresponding to each other. The material of each component constituting the first electrode 100 and the material of each component constituting the second electrode 200 may be different, but the arrangement relationship between the components constituting each electrode may correspond to each other. Therefore, for convenience of explanation, the following description focuses on the structure of the first electrode 100 and the resulting effects, but this may be equally applied to the second electrode 200.

Referring to FIG. 1, the separator 300 may be arranged between the first electrode 100 and the second electrode 200. The separator 300 may prevent a short circuit between the first electrode 100 and the second electrode 200 while allowing movement of lithium ions. The separator 300 may be composed of, for example, a polyethylene film, a polypropylene film, a polyethylene-polypropylene film, etc.

The case 20 may form the outer shape of the secondary battery 1. The case 20 may accommodate an electrode assembly 10 and an electrolyte (not illustrated). That is, the case 20 may provide a space in which components are arranged to allow movement of ions.

The case 20 may have an opening through which the electrode assembly 10 is accommodated. The case 20 may be sealed by covering the opening in which the electrode assembly 10 is accommodated with a cap 30.

The cap 30 may be arranged on one side of the case 20 and may be electrically connected to the electrode assembly 10. For example, the cap 30 may be connected to the first electrode 100 or the second electrode 200 of the electrode assembly 10. The cap 30 may be electrically connected to an external component and may serve as a medium through which the external component receives power from the electrode assembly 10.

In FIG. 1, the secondary battery 1 is illustrated as a cylindrical battery, but the type of the secondary battery 1 is not limited to this. For example, the secondary battery 1 may be a pouch-type battery or a square-type battery, or any other type of battery in which an electrode assembly 10 is arranged.

Hereinafter, the x-axis, y-axis, and z-axis are not limited to the three axes of an orthogonal coordinate system, but may be interpreted in a broader sense including the same. For example, the x-axis, y-axis, and z-axis may be orthogonal to one another, but may refer to different directions that are not orthogonal to one another. For convenience of explanation, the x-axis may be defined as a length direction in which a current collector 110 extends, the y-axis may be defined as a width direction of the current collector 110, and the z-axis may be defined as a thickness direction of the current collector 110. In other words, the x-axis may be parallel to a direction in which the current collector 110 is transported during the manufacture of the electrode 100, as described later.

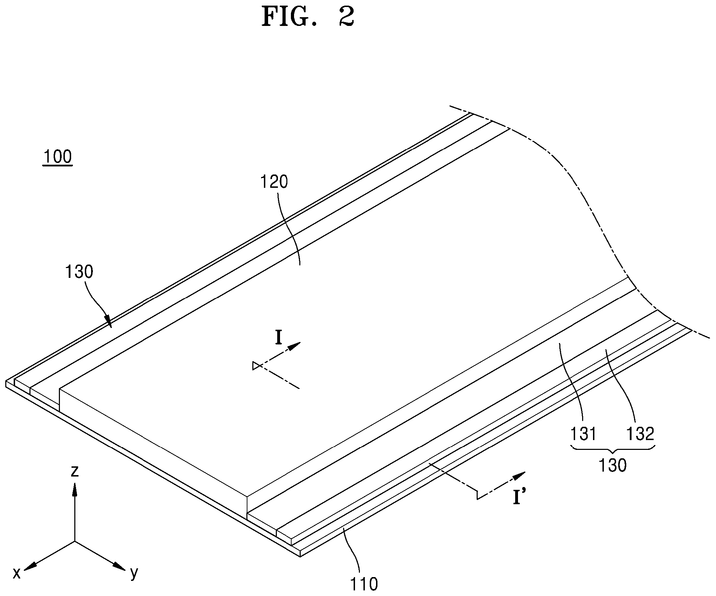

FIG. 2 is a perspective view illustrating an electrode for a secondary battery of FIG. 1.

Referring to FIG. 2, the first electrode (hereinafter, "the electrode") 100 includes a current collector 110, an active material layer 120, and an insulating portion 130.

The current collector 110 may provide a space in which the active material layer 120 and the insulating portion 130 are arranged. The active material layer 120 and the insulating portion 130 arranged on the current collector 110 may be supported by the current collector 110.

The current collector 110 may be a conductive metal substrate for transmitting the current of the electrode 100 to the outside. For example, if the electrode 100 is a positive electrode, the current collector 110 may be formed of aluminium (Al), and if the electrode 100 is a negative electrode, the current collector 110 may be formed of copper (Cu). However, the material of the current collector 110 is not limited thereto.

The current collector 110 may extend in one direction. The unidirectional extension structure of the current collector 110 may allow the active material layer 120 and the insulating portion 130 arranged on the current collector 110 to extend together along a length direction. That is, the current collector 110 may increase the capacity of the secondary battery 1 including the electrode 100 by continuously forming the active material layer 120 and the insulating portion 130 to expand the active area of the electrode 100.

The active material layer 120 is arranged on the current collector 110 and may extend in a direction parallel to the direction in which the current collector 110 extends. That is, the active material layer 120 may be formed continuously to correspond to the length of the current collector 110. Thus, the active area of the electrode 100 may be secured, and the capacity of the secondary battery 1 may be improved.

The active material layer 120 may include an active material that performs an electrochemical reaction. For example, the active material layer 120 may include a lithium metal oxide material when the electrode 100 is a positive electrode. Alternatively, when the electrode 100 is a negative electrode, the active material layer 120 may include one or more materials capable of inserting or storing lithium ions, such as graphite, a silicon composite, or lithium metal. However, the material constituting the active material layer 120 is not limited thereto.

The insulating portion 130 may be formed of a material having electrical insulating properties. For example, the insulating portion 130 may include a polymer insulating resin such as polyimide, epoxy resin, or silicon resin, but the type of material constituting the insulating portion 130 is not limited thereto.

The insulating portion 130 may be arranged on the current collector 110. For example, the insulating portion 130 may be arranged on an area on the current collector 110 where the active material layer 120 is not formed.

The insulating portion 130 is in contact with a side of the active material layer 120. The insulating portion 130 may be in contact with one side of an edge of the active material layer 120 that extends parallel to the length direction of the current collector 110. That is, the insulating portion 130 may cover the side of the active material layer 120, thereby electrically isolating the active material layer 120 from other electrical components such as electrodes.

Referring to FIG. 2, the insulating portion 130 may be arranged on both sides of the edge of the active material layer 120 extending in the length direction of the current collector 110. That is, the insulating portion 130 may be arranged along both edges, in the length direction, of the active material layer 120, thereby separating the active material layer 120 from electrical components such as an external electrode. Thus, the insulating portion 130 may effectively prevent electrical short circuits within the electrode assembly 10.

In embodiments, the insulating portion 130 includes ceramic. In some embodiments, the insulating portion 130 may include a ceramic having a preset concentration. By including ceramic in the insulating portion 130, the cut surface of the electrode 100 may be made uniform when the insulating portion 130 is cut in the cutting process of the electrode 100.

In embodiments, the insulating portion 130 includes a first insulating layer 131 and a second insulating layer 132.

The first insulating layer 131 is in contact with the active material layer 120. The first insulating layer 131 may be directly connected to a side of the active material layer 120, and may have a predetermined width and a shape extending in a direction parallel to the direction in which the active material layer 120 extends.

In other words, the first insulating layer 131 may extend in a direction parallel to the direction in which the current collector 110 extends. Thus, the first insulating layer 131 may cover the side of the active material layer 120 extending over the current collector 110.

Hereinafter, the "ceramic concentration" of a particular composition may be defined as the weight ratio of the ceramic filler to the total composition of the target composition.

The first insulating layer 131 has a first ceramic concentration. Again, the first insulating layer 131 includes a ceramic of a preset concentration, thereby enhancing electrical insulation and heat resistance, and may improve cut-surface quality during a cutting process using a laser.

The second insulating layer 132 is in contact with the first insulating layer 131. The second insulating layer 132 may be arranged on the other side opposite to one side of the first insulating layer 131 that is in contact with the active material layer 120. The second insulating layer 132 may be arranged at a preset interval from the active material layer 120, but may be in contact with the first insulating layer 131.

The second insulating layer 132 may cover one side of the first insulating layer 131. For example, the second insulating layer 132 may cover the side of the first insulating layer 131. Since the side of the first insulating layer 131 is covered by the second insulating layer 132, when the second insulating layer 132 is cut in a cutting process using a laser, the cover structure of the active material layer 120 using the first insulating layer 131 may be stably maintained.

The second insulating layer 132 has a second ceramic concentration different from the first ceramic concentration. Thus, the quality of the second insulating layer 132, such as electrical insulation, heat resistance, strength, or uniformity of the cut surface formed by a laser cutting process, may be different from that of the first insulating layer 131.

Since the first ceramic concentration and the second ceramic concentration are set differently from each other, the first insulating layer 131 and the second insulating layer 132 may perform different roles. For example, the first insulating layer 131 and the second insulating layer 132 may have different heat resistance, insulation, and strength, and may perform the function of supporting the active material layer 120 or preventing a short circuit between the active material layer 120 and an external component.

In embodiments, the second ceramic concentration may be greater than the first ceramic concentration. By setting the second ceramic concentration to be greater than the first ceramic concentration, the cut cross-section of the second insulating layer 132 may be more uniform than the cut cross-section of the first insulating layer 131 during a cutting process using a laser.

Although the magnitudes of the first ceramic concentration and the second ceramic concentration are not limited to those described herein, for convenience of explanation, the following description focuses on an example in which the second ceramic concentration is greater than the first ceramic concentration.

In other words, the active material layer 120 of the electrode 100 in a state where the manufacturing process is completed may be covered by the first insulating layer 131, and the cut surface of the second insulating layer 132 may be maintained uniformly. Thus, the electrical stability and structural stability of the electrode assembly 10 may be improved.

In addition, the position where the cut surface is formed during the cutting process of the electrode 100 using a laser is not limited, but for convenience of explanation, the following description focuses on an example in which the cutting process of the electrode 100 is performed by irradiating the laser at the position where the second insulating layer 132 is arranged. That is, after the cutting process for the electrode 100, the quality of a cut cross-section of the electrode 100 may be further improved.

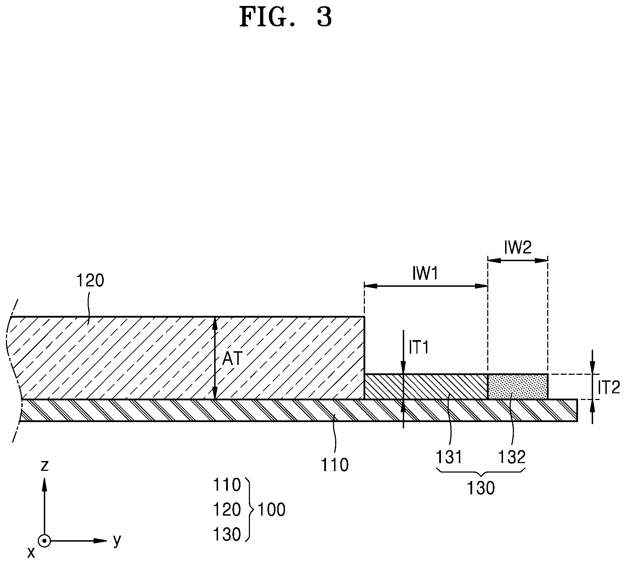

FIG. 3 is a cross-sectional view taken along line I-I' of FIG. 2.

Referring to FIG. 3, the active material layer 120, the first insulating layer 131, and the second insulating layer 132 may have preset widths and thicknesses.

In embodiments, the first insulation width IW1 of the first insulating layer 131 may be greater than the second insulation width IW2 of the second insulating layer 132. By setting the first insulation width IW1 to be larger than the second insulation width IW2, an area for insulating the active material layer 120 from the outside may be secured, and the electrical stability of the electrode assembly 10 may be improved.

In addition, since the second insulation width IW2 is set to be smaller than the first insulation width IW1, a cutting area may be minimized when one side of the second insulating layer 132 is cut by a cutting process. Thus, the production efficiency of the electrode assembly 10 may be improved.

In embodiments, the first insulation thickness IT1 of the first insulating layer 131 may be smaller than the first insulation width IW1. That is, the first insulating layer 131 covers a relatively wide area in the width direction of the current collector 110, but is formed thinly such that the thickness of the electrode 100 may be maintained thin.

By setting the first insulation width IW1 to be larger than the first insulation thickness IT1, the area in which the first insulating layer 131 comes into contact with the current collector 110 may be secured. Again, the first insulating layer 131 may be in contact with the current collector 110 over a wider area, such that it may be more stably attached to the current collector 110. Thus, the durability of the electrode assembly 10 may be improved.

The second insulation thickness IT2 of the second insulating layer 132 may be smaller than the second insulation width IW2. Again, the second insulating layer 132 may have a relatively large width compared to the thickness thereof. The second insulating layer 132 may be in contact with the current collector 110 over a wider area, thereby strengthening the bond with the current collector 110 and improving the structural stability of the electrode assembly 10.

As described later, the second insulating layer 132 corresponds to the intended area where cutting takes place in the cutting process of the electrode 100, so the width of the second insulating layer 132 may be set wide to secure a cuttable area. That is, since there is enough space to flexibly set the cutting position during the cutting process, the process stability and accuracy may be improved.

The first insulation thickness IT1 of the first insulating layer 131 and the second insulation thickness IT2 of the second insulating layer 132 may be smaller than the active material thickness AT of the active material layer 120. Again, the insulating portion 130 may be formed thinner than the active material layer 120 on the current collector 110. Thus, the thickness of the electrode 100 may be reduced and a high-density winding structure of the electrode assembly 10 may be formed.

By forming the first insulation thickness IT1 and the second insulation thickness IT2 to be smaller than the active material thickness AT, interference with adjacent components may be reduced when forming the electrode assembly 10. That is, the assembly precision and workability of the secondary battery 1 using the electrode assembly 10 may be improved.

Hereinafter, the "top surface" of a component may be defined as a side of the component facing in a direction parallel to the direction in which one side of the current collector 110 on which the active material layer 120 and the insulating portion 130 are arranged faces. In other words, the "top surface" of a component may be defined as one side of the component facing in a direction parallel to the thickness direction of the current collector 110.

In embodiments, the first insulation thickness IT1 and the second insulation thickness IT2 may have sizes corresponding to each other. The first insulating layer 131 and the second insulating layer 132, which are in contact with each other and connected, have corresponding thicknesses such that the upper surface of the first insulating layer 131 and the upper surface of the second insulating layer 132 may form a continuous shape. Thus, when the electrode 100 and the separator 300 are wound together, empty space may be minimized and the structure of the electrode assembly 10 may be made compact.

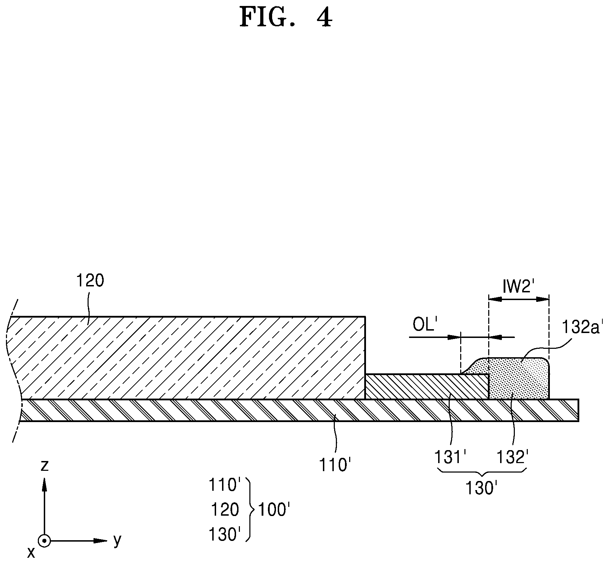

FIG. 4 is a cross-sectional view, taken along line I-I' of FIG. 2, of an electrode for a secondary battery according to embodiments of the disclosure.

An electrode 100' for a secondary battery according to embodiments of the disclosure is different only in the shapes of some components when compared to the electrode 100 for a secondary battery according to embodiments of the disclosure. Thus, the following description focuses on the differences, omitting any redundant descriptions.

Referring to FIG. 4, a second insulating layer 132' of the electrode 100' may cover one side of a first insulating layer 131'. In detail, the second insulating layer 132' may cover the upper surface of the first insulating layer 131'.

The second insulating layer 132' is formed thicker than the first insulating layer 131' and may cover the upper surface of the first insulating layer 131'. For example, a protrusion 132a' extending in the thickness direction of a current collector 110' and contacting the upper surface of the first insulating layer 131' may be formed on the second insulating layer 132'.

The first insulating layer 131' may be connected to the second insulating layer 132' not only at a side but also through a portion of the upper surface thereof. Since the contact area between the first insulating layer 131' and the second insulating layer 132' is improved, the structural stability of an insulating portion 130' may be improved.

Since one side of the upper surface of the first insulating layer 131' is covered by the protrusion 132a', the influence of laser irradiated during a cutting process for the second insulating layer 132' on the first insulating layer 131' may be reduced. When the second ceramic concentration is greater than the first ceramic concentration, the protrusion 132a' may maintain a uniform outer surface even when the laser is irradiated, so the protrusion 132a' may minimize the influence of the laser on the first insulating layer 131' during the cutting process and maintain the outer surface of the insulating portion 130' uniform.

Hereinafter, the "overlapping" of multiple components may be defined as sides of the respective components overlapping each other when observed along the thickness direction of the current collector 110'.

The overlapping area in which the protrusion 132a' is arranged on the upper surface of the first insulating layer 131' may have an overlapping width OL', which is the length in the width direction of the current collector 110'.

In embodiments, the overlap width OL' may be smaller than a second insulation width IW2'. Since the overlapping width OL' is smaller than the second insulation width IW2', the area of the upper surface of the first insulating layer 131' covered by the protrusion 132a' may be reduced. In other words, the area where the outer surface of the insulating portion 130' becomes uneven due to interference between the first insulating layer 131' and the second insulating layer 132' may be reduced. Thus, the insulating portion 130' may have a more uniform shape, and the structural stability and energy density of the electrode 100' may be improved.

The electrodes for a secondary battery according to embodiments of the disclosure may improve the quality of a cut surface thereof after the cutting process and strengthen the connection relationship between components thereof by using an insulating portion arranged on the side of the active material layer. The electrodes for a secondary battery each include a first insulating layer and a second insulating layer having different ceramic concentrations, such that a cut surface is formed uniformly during the cutting process using laser, and the influence of heat generated during the cutting process on the electrodes is minimized, thereby improving the reliability of the electrode assembly.

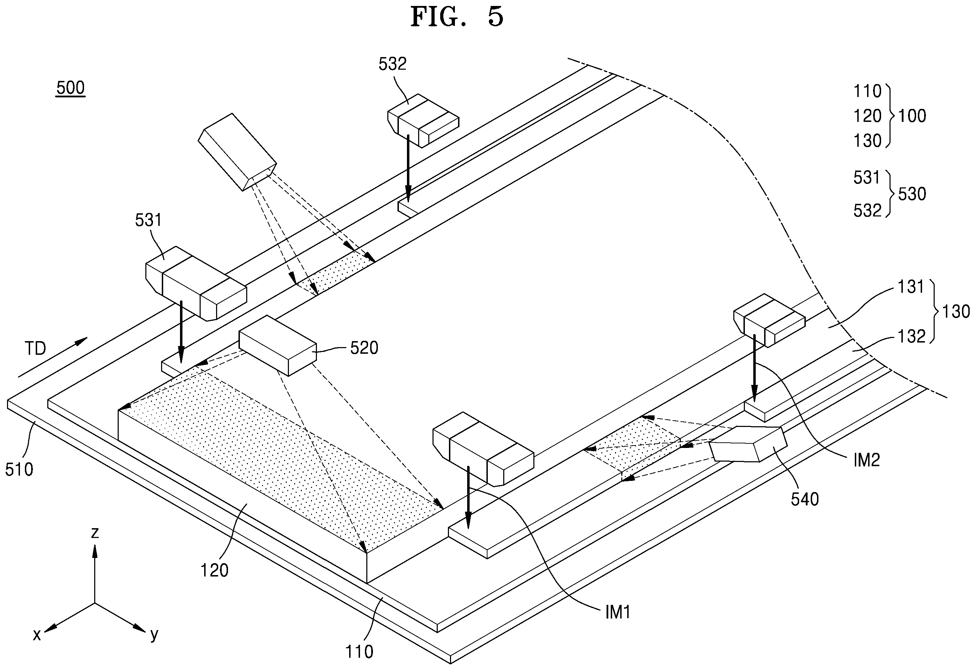

FIG. 5 is a view illustrating a manufacturing apparatus for an electrode for a secondary battery according to embodiments of the disclosure.

Referring to FIG. 5, a manufacturing apparatus 500 for an electrode for a secondary battery according to embodiments of the disclosure may include a conveying unit 510, an active material photographing unit 520, an insulating coater unit 530, and an insulating layer photographing unit 540.

The conveying unit 510 transports the current collector 110 on which the active material layer 120 is arranged. In detail, the conveying unit 510 may transport the current collector 110 having an active material layer 120 arranged on one side in the direction in which the current collector 110 extends.

The conveying unit 510 transports the current collector 110 in a transport direction TD, such that insulating members discharged from the insulating coater unit 530 described later may extend along the transport direction TD on the current collector 110.

The active material photographing unit 520 obtains active material image information for the active material layer 120. The active material photographing unit 520 may irradiate light on the active material layer 120 and collect light reflected from the active material layer 120, thereby obtaining image information on the active material layer 120.

The active material photographing unit 520 may be, for example, an optical camera, an infrared camera, or a depth sensor, but the type of the active material photographing unit 520 is not limited thereto.

The insulating coater unit 530 forms an insulating portion 130 on the current collector 110. Specifically, the insulating coater unit 530 forms the insulating portion 130 on the current collector 110 such that the insulating portion 130 is in contact with the side of the active material layer 120.

In embodiments, the insulating coater unit 530 includes a first insulating coater 531 and a second insulating coater 532.

The first insulating coater 531 forms a first insulating layer 131 by applying a first insulating member IM1 on the current collector 110.

The first insulating member IM1 discharged from the first insulating coater 531 may be arranged on the current collector 110 and may be transported along the transport direction TD by the conveying unit 510. Thus, the first insulating coater 531 may form a first insulating layer 131 having a continuous shape along the transport direction TD.

The first insulating coater 531 may discharge the first insulating member IM1 onto the area on the current collector 110 where the active material layer 120 is not formed. For example, the position of the first insulating coater 531 may be controlled based on the active material image information received from the active material photographing unit 520 as described herein. The first insulating coater 531 may determine the discharge position of the first insulating member IM1 such that the first insulating layer 131 comes into contact with the side of the active material layer 120.

The second insulating coater 532 forms a second insulating layer 132 by applying a second insulating member IM2 on the current collector 110.

The second insulating member IM2 discharged from the second insulating coater 532 may be arranged on the current collector 110 and may be moved in one direction by the conveying unit 510. Thus, the second insulating coater 532 may form a second insulating layer 132 having a continuous shape along one direction.

The second insulating coater 532 may discharge the second insulating member IM2 to the area on the current collector 110 where the active material layer 120 is not formed. For example, the second insulating coater 532 may discharge the second insulating member IM2 to the area on the current collector 110 where the active material layer 120 and the first insulating layer 131 are not formed.

The position of the second insulating coater 532 may be controlled based on insulation image information received from the insulating layer photographing unit 540 described later. The second insulating coater 532 may determine the discharge position of the second insulating member IM2 such that the second insulating layer 132 comes into contact with the side of the first insulating layer 131.

The first insulating member IM1 and the second insulating member IM2 includes ceramic. The first insulating member IM1 has a first ceramic concentration, and the second insulating member IM2 has a second ceramic concentration different from the first ceramic concentration. Thus, the first insulating coater 531 forms a first insulating layer 131 having the first ceramic concentration, and the second insulating coater 532 forms a second insulating layer 132 having the second ceramic concentration.

In embodiments, the first insulating coater 531 may discharge a first insulating member IM1 having a first ceramic concentration, and the second insulating coater 532 may discharge a second insulating member IM2 having a second ceramic concentration higher than the first ceramic concentration.

The first insulating coater 531 may be arranged upstream of the second insulating coater 532 with respect to the transport direction TD of the current collector 110. The first insulating coater 531 may discharge the first insulating member IM1 onto the current collector 110 at an earlier time than the second insulating coater 532. In other words, the first insulating member IM1 may be first applied on the current collector 110, thereby forming the first insulating layer 131, and the second insulating member IM2 may then be applied, thereby forming the second insulating layer 132.

That is, when coating the insulating portion 130 using the insulating coater unit 530, the insulating layer adjacent to the active material layer 120 may be formed first. Thus, alignment of the insulating portion 130 may be facilitated.

The insulating layer photographing unit 540 may obtain insulation image information for the first insulating layer 131. The insulating layer photographing unit 540 may irradiate light to the first insulating layer 131 and collect light reflected from the first insulating layer 131, thereby obtaining image information on the first insulating layer 131.

The insulating layer photographing unit 540 may be arranged between the first insulating coater 531 and the second insulating coater 532. That is, the insulating layer photographing unit 540 may be arranged downstream of the first insulating coater 531 with respect to the transport direction TD of the current collector 110, but upstream of the second insulating coater 532.

The insulating layer photographing unit 540 may obtain image information on the first insulating layer 131 formed by the first insulating coater 531. In detail, the insulating layer photographing unit 540 may be arranged upstream of the second insulating coater 532 and may thus obtain information on the first insulating layer 131 before the second insulating layer 132 is formed.

That is, the insulating layer photographing unit 540 may obtain image information on the first insulating layer 131 that is not covered by the second insulating layer 132. Thus, accurate insulation image information may be secured that may be utilized to determine the position of the second insulating coater 532 that discharges the second insulating member IM2.

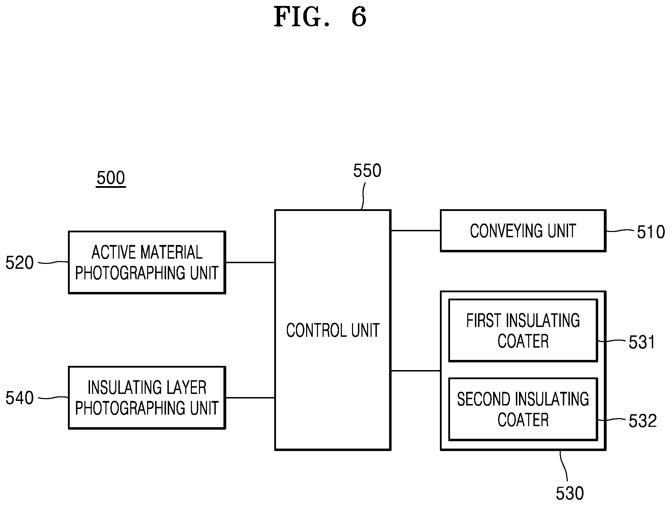

FIG. 6 is a schematic view illustrating the manufacturing apparatus of FIG. 5.

Referring to FIG. 6, the manufacturing apparatus 500 may further include a control unit 550.

The control unit 550 may be electrically connected to the active material photographing unit 520. The control unit 550 may obtain active material image information including the active material layer 120 from the active material photographing unit 520 and use it as general information for controlling the operation of the insulating coater unit 530.

In embodiments, the control unit 550 may extract information on the shape of the active material layer 120 from the active material image information. The control unit 550 may generate a control signal for the first insulating coater 531 based on the result of comparing information on the outer shape of the active material layer 120 and information on the discharge position of the first insulating member IM1.

The control unit 550 may be electrically connected to the insulating layer photographing unit 540 and may thus obtain insulation image information from the insulating layer photographing unit 540. The control unit 550 may use the insulation image information as general information to generate a control signal for the insulating coater unit 530.

The control unit 550 may generate a control signal for the second insulating coater 532 based on the result of comparing information on the outer shape of the first insulating layer 131 and information on the discharge position of the second insulating member IM2.

The control unit 550 may transmit a control signal to the conveying unit 510. For example, the control unit 550 may control a transport speed of the current collector 110 of the conveying unit 510 by receiving a command value from a worker and transmitting a control signal to the conveying unit 510, or may control the transport speed of the current collector 110 based on information on the thickness of the active material layer 120.

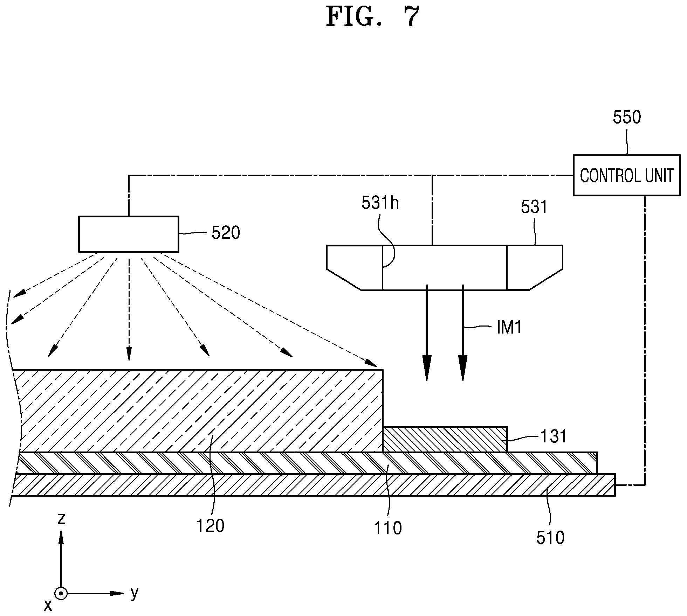

FIG. 7 is a view illustrating a partial configuration of the manufacturing apparatus for an electrode for a secondary battery according to embodiments of the disclosure.

Referring to FIG. 7, the control unit 550 may control the position of the first insulating coater 531 based on the active material image information obtained from the active material photographing unit 520. Specifically, the control unit 550 may adjust the position of the first insulating coater 531 such that the first insulating layer 131 comes into contact with the active material layer 120 based on the active material image information.

In embodiments, the control unit 550 may store information on the outer shape of the active material layer 120 from the active material image information as three-dimensional coordinate information and compare it with information on the discharge position of the first insulating member IM1 discharged from the first insulating coater 531.

The control unit 550 may determine the position at which the first insulating member IM1 is applied on the current collector 110 by adjusting the position of the first insulating coater 531 based on the result of comparing information on the outer shape of the active material layer 120 and information on the discharge position of the first insulating member IM1.

For example, the control unit 550 may control the position of the first insulating coater 531 such that the first insulating slit 531h through which the first insulating member IM1 is discharged from the first insulating coater 531 does not overlap with the active material layer 120. Alternatively, the control unit 550 may control the position of the first insulating coater 531 such that the first insulating slit 531h is not spaced apart from the active material layer 120 by more than a preset distance.

In embodiments, the first insulating coater 531 may move in a direction crossing the transport direction TD. For example, the first insulating coater 531 may move along the width direction of the current collector 110.

The first insulating coater 531 may determine the position where the first insulating layer 131 is formed, by moving toward the active material layer 120 or moving away from the active material layer 120. The position of the first insulating coater 531 may be controlled according to the shape of the active material layer 120, and thus, the first insulating member IM1 may be discharged to cover the side of the active material layer 120.

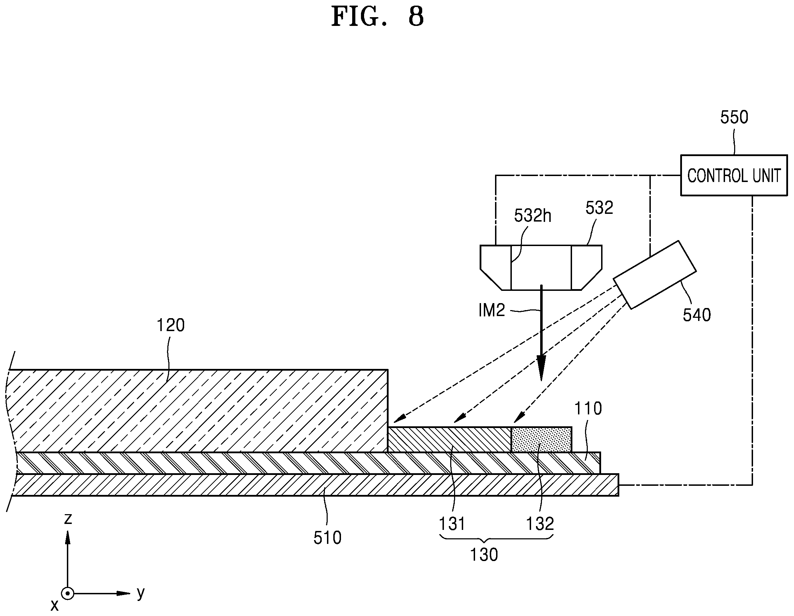

FIG. 8 is a view illustrating another partial configuration of the manufacturing apparatus for an electrode for a secondary battery according to embodiments of the disclosure.

Referring to FIG. 8, the control unit 550 may control the position of the second insulating coater 532 based on the insulation image information obtained from the insulating layer photographing unit 540. In detail, the control unit 550 may adjust the position of the second insulating coater 532 based on the insulation image information such that the second insulating layer 132 comes into contact with the first insulating layer 131.

In embodiments, the control unit 550 may extract information on the shape of the first insulating layer 131 from the insulation image information. For example, the control unit 550 may store information on the outer shape of the first insulating layer 131 from the insulation image information as three-dimensional coordinate information and compare it with information on the discharge position of the second insulating member IM2 from the second insulating coater 532.

The control unit 550 may determine the position at which the second insulating member IM2 is applied on the current collector 110 by adjusting the position of the second insulating coater 532 based on the result of comparing information on the outer shape of the first insulating layer 131 and information on the discharge position of the second insulating member IM2.

For example, the control unit 550 may control the position of the second insulating coater 532 such that the second insulating slit 532h through which the second insulating member IM2 is discharged from the second insulating coater 532 does not overlap with the first insulating layer 131. Alternatively, the control unit 550 may adjust the position of the second insulating coater 532 such that the second insulating slit 532h is not spaced apart from the first insulating layer 131 by more than a preset distance.

In embodiments, the second insulating coater 532 may move in a direction crossing the transport direction TD. The second insulating coater 532 may determine the position where the second insulating layer 132 is formed, by moving toward the first insulating layer 131 or moving away from the first insulating layer 131. The position of the second insulating coater 532 may be controlled according to the shape of the first insulating layer 131, and thus, the second insulating member IM2 may be discharged to cover the side of the first insulating layer 131.

In embodiments, the width of the second insulating slit 532h of the second insulating coater 532 may be smaller than the width of the first insulating slit 531h of the first insulating coater 531. The first insulating member IM1 discharged from the first insulating coater 531 may be applied on the current collector 110, having a width greater than the width of the second insulating member IM2 discharged from the second insulating coater 532. Thus, the first insulation width IW1 may be set to be larger than the second insulation width IW2.

The manufacturing apparatus for an electrode for a secondary battery according to embodiments of the disclosure may obtain image information on an active material layer and an insulating portion applied on a current collector, and may control the position of an insulating coater unit based on the obtained image information, thereby enabling the active material layer and the insulating portion to be accurately aligned. The manufacturing apparatus for an electrode for a secondary battery may improve the alignment precision of the active material layer and the insulating portion by determining the position at which a first insulating layer is formed using active material image information for the active material layer and determining a position at which a second insulating layer is formed using image information on the first insulating layer.

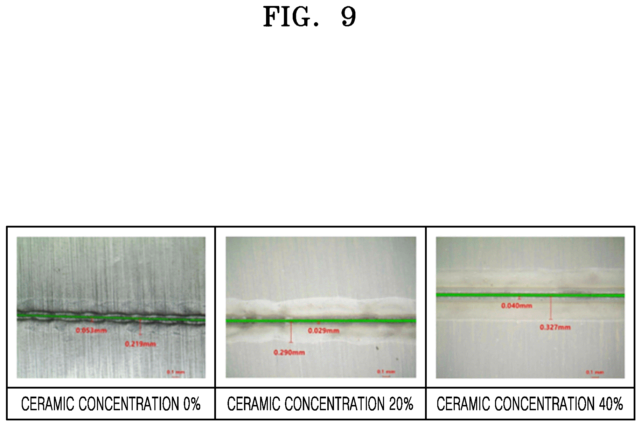

FIG. 9 is experimental data illustrating cut-surface quality according to the concentration of ceramic included in an electrode for a secondary battery.

Referring to FIG. 9, it may be confirmed that as the concentration of ceramic included in the insulating portion increases, the cross-section of the cut surface becomes more uniform during the cutting process.

It may be observed that if the insulating portion does not contain ceramic, the cut surface of the insulating portion becomes uneven. That is, when the ceramic concentration of the insulating portion is 0 percent, the cross-sectional boundary of the insulating portion is non-uniform and irregular.

Additionally, if the insulation does not contain ceramic, one side of the insulating portion affected by the heat generated during cutting may undergo a relatively large degree of thermal deformation.

Referring to FIG. 9, when the ceramic concentration of the insulating portion is 20 percent, the cut cross-section of the insulating portion may be improved compared to when the ceramic concentration is 0 percent.

That is, when ceramic is included in the insulating portion, the cross-section of the insulating portion becomes more uniform, and the boundary of the cross-section exhibits a consistent shape.

In addition, the degree of thermal deformation on one side of the insulating portion affected by the heat generated during cutting may be reduced compared to the case where ceramic is not included, and thus the insulating portion may be structurally stabilized.

Referring to FIG. 9, the data shows that when the ceramic concentration of the insulating portion is 40 percent, the cross-section of the insulating portion becomes more uniform and the slope of the boundary of the cross-section becomes constant. In addition, the degree of thermal deformation on one side of the insulating portion affected by the heat generated during cutting may be substantially reduced. Accordingly, the structure of the insulating portion may become more stable, and the shape of the insulating portion may be maintained consistently.

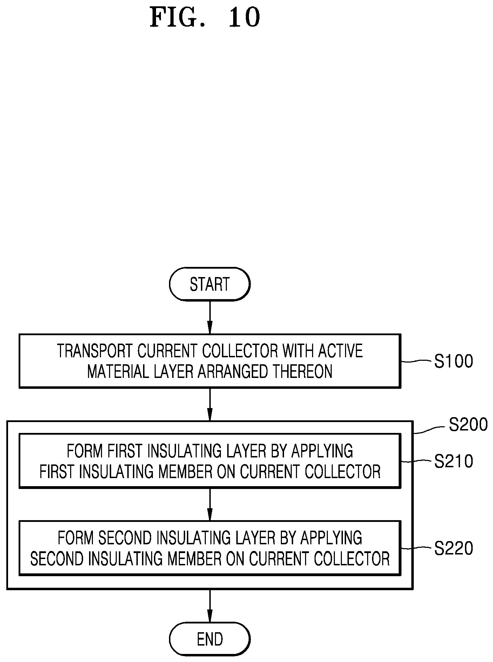

FIG. 10 is a view illustrating a method of manufacturing an electrode for a secondary battery according to embodiments of the disclosure.

Referring to FIG. 10, the manufacturing method includes transporting the current collector (S100) and arranging the insulating portion (S200).

In transporting the current collector (S100), the current collector 110 on which the active material layer 120 is arranged is transported. In transporting the current collector (S100), the current collector 110 on which the active material layer 120 is arranged may be transported along the transport direction TD using the conveying unit 510.

In transporting the current collector (S100), the current collector 110 may be moved along the transport direction TD, and in arranging the insulating portion described later (S200), a first insulating member IM1 and a second insulating member IM2 may be applied on the current collector 110, thereby forming a first insulating layer 131 and a second insulating layer 132 having a continuous shape.

In arranging the insulating portion (S200), the insulating portion 130 is arranged on the current collector 110. For example, in arranging the insulating portion (S200), the insulating portion 130 may be arranged on an area on the current collector 110 where the active material layer 120 is not arranged.

In arranging the insulating portion (S200), the insulating portion 130 may be arranged on both sides of the edge of the active material layer 120. Thus, in arranging the insulating portion 130 (S200), an insulating portion 130 that prevents an electrical short circuit within the electrode assembly 10 may be formed.

In embodiments, arranging the insulating portion 130 (S200) includes forming the first insulating layer (S210) and forming the second insulating layer (S220).

In forming the first insulating layer (S210), the first insulating layer 131 may be formed by applying the first insulating member IM1 on the current collector 110. For example, in forming the first insulating layer (S210), a first insulating layer 131 in contact with the side of the active material layer 120 may be formed using the first insulating coater 531.

In forming the second insulating layer (S220), the second insulating layer 132 may be formed by applying the second insulating member IM2 on the current collector 110. For example, in forming the second insulating layer (S220), a second insulating layer 132 in contact with the first insulating layer 131 may be formed using the second insulating coater 532.

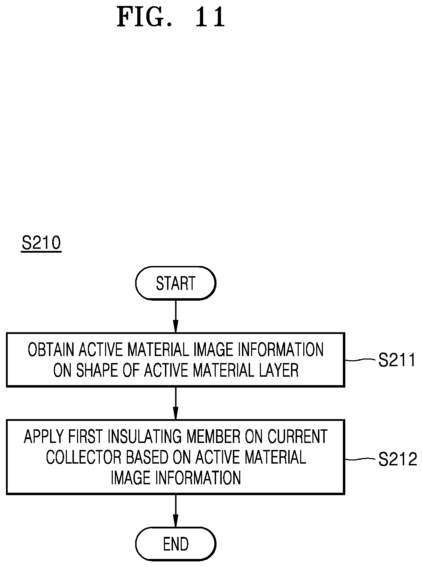

FIG. 11 is a view illustrating some steps of FIG. 10 in detail.

Referring to FIG. 11, forming the first insulating layer (S210) may include obtaining active material image information (S211) and applying the first insulating member on the current collector (S212).

In obtaining the active material image information (S211), image information on the active material layer 120 on the current collector 110 transported along the transport direction TD may be obtained.

In embodiments, in obtaining the active material image information (S211), the active material layer 120 may be photographed using the active material photographing unit 520. In obtaining the active material image information (S211), the active material photographing unit 520 may be arranged upstream of the first insulating coater 531 with respect to the transport direction TD, thereby enabling acquisition of general information for controlling the first insulating coater 531.

In obtaining the active material image information (S211), image information on the shape of the active material layer 120 may be obtained, and the acquired active material image information may be used as general information for generating a control signal for the first insulating coater 531.

In applying the first insulating member on the current collector (S212), the first insulating member IM1 may be applied on the current collector 110. In applying the first insulating member on the current collector (S212), the position on the current collector 110 where the first insulating member IM1 is discharged may be adjusted by controlling the position of the first insulating coater 531.

In applying the first insulating member on the current collector (S212), the position of the first insulating coater 531 may be controlled based on the active material image information. In applying the first insulating member on the current collector (S212), by controlling the position of the first insulating coater 531, the discharge position of the first insulating member IM1 may be adjusted such that the first insulating layer 131 comes into contact with the active material layer 120.

In embodiments, in applying the first insulating member on the current collector (S212), the position of the first insulating coater 531 may be adjusted by extracting information on the outer shape of the active material layer 120 from the active material image information, and comparing the extracted information with information on the position where the first insulating member IM1 is discharged.

In embodiments, in applying the first insulating member on the current collector (S212), the first insulating member IM1 may be applied based on the active material image information such that the first insulation thickness IT1 of the first insulating layer 131 is smaller than the active material thickness AT of the active material layer 120.

In applying the first insulating member on the current collector (S212), information on the active material thickness AT may be extracted from the information on the outer shape of the active material layer 120, and by using this information, the discharge speed, flow rate, etc. of the first insulating member IM1 may be adjusted to control the first insulation thickness IT1. Thus, interference between adjacent components may be reduced when forming the electrode assembly 10.

In embodiments, in applying the first insulating member on the current collector (S212), the first insulating coater 531 may be moved in a direction crossing the transport direction TD. For example, in applying the first insulating member on the current collector (S212), the first insulating coater 531 may be moved along the width direction of the current collector 110.

In applying the first insulating member on the current collector (S212), by determining the position of the first insulating coater 531 according to the position of the active material layer 120, the first insulating member IM1 may be applied on the current collector 110 such that the first insulating layer 131 covers the side of the active material layer 120.

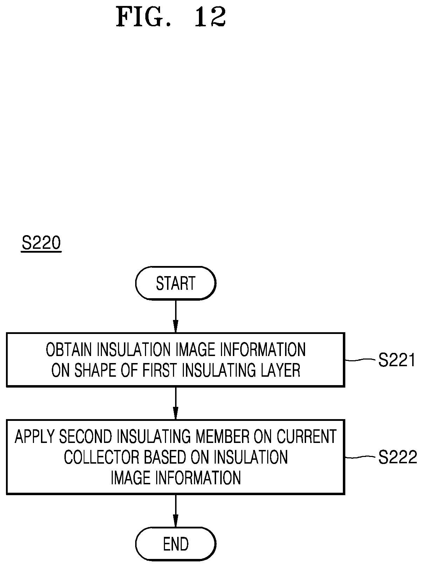

FIG. 12 is a view illustrating other steps of FIG. 10 in detail.

Referring to FIG. 12, forming the second insulating layer (S220) may include obtaining insulation image information (S221) and applying the second insulating member (S222).

In obtaining the insulation image information, image information on the first insulating layer 131 on the current collector 110 being transported along the transport direction TD may be obtained.

In embodiments, in obtaining the insulation image information (S221), the first insulating layer 131 may be photographed using the insulating layer photographing unit 540. In obtaining the insulation image information (S221), the insulating layer photographing unit 540 may be arranged upstream of the second insulating coater 532 with respect to the transport direction TD, thereby enabling acquisition of general information for controlling the second insulating coater 532.

In applying the second insulating member (S222), the second insulating member IM2 may be applied on the current collector 110. In applying the second insulating member (S222), the position on the current collector 110 where the second insulating member IM2 is discharged may be adjusted by controlling the position of the second insulating coater 532.

In applying the second insulating member (S222), the position of the second insulating coater 532 may be controlled based on the insulation image information. In applying the second insulating member (S222), the discharge position of the second insulating member IM2 may be adjusted by controlling the position of the second insulating coater 532 such that the second insulating layer 132 comes into contact with the first insulating layer 131.

In embodiments, in applying the second insulating member (S222), information on the outer shape of the first insulating layer 131 may be extracted from the insulation image information, and the extracted information may be compared with information on the discharge position of the second insulating member IM2, thereby adjusting the position of the second insulating coater 532.

In applying the second insulating member (S222), the second insulating member IM2 may be applied on the current collector 110 such that the second insulation width IW2 of the second insulating layer 132 is smaller than the first insulation width IW1 of the first insulating layer 131 based on the insulation image information.

For example, in applying the second insulating member (S222), information on the width of the first insulating layer 131 may be extracted from the information on the outer shape of the first insulating layer 131, and by using this information, the movement of the second insulating coater 532 may be controlled such that the width of the second insulating layer 132 is smaller than the width of the first insulating layer 131.

In applying the second insulating member (S222), the second insulating member IM2 may be applied on the current collector 110 such that the second insulating layer 132 covers one side of the first insulating layer 131 based on the insulation image information.

In embodiments, in applying the second insulating member (S222), information on the width of the second insulating layer 132 may be extracted from the information on the outer shape of the first insulating layer 131, and by using this information, the position of the second insulating coater 532 may be adjusted such that the second insulating member IM2 is arranged in part on the upper surface of the first insulating layer 131.

In applying the second insulating member (S222), the protrusion 132a' formed to extend from the second insulating member IM2 may be arranged on the upper surface of the first insulating layer 131', such that the first insulating layer 131' is protected by the second insulating layer 132'.

A method of manufacturing an electrode for a secondary battery according to embodiments of the disclosure may obtain image information on an active material layer and an insulating portion applied on a current collector, and control the position of an insulating coater unit based on the obtained image information, thereby ensuring that the active material layer and the insulating portion are accurately aligned. The method of manufacturing an electrode for a secondary battery according to embodiments of the disclosure may improve the alignment precision of an active material layer and the insulating portion by determining a position at which a first insulating layer is formed using active material image information for the active material layer and determining a position at which a second insulating layer is formed using image information for the first insulating layer.

An electrode for a secondary battery according to embodiments of the disclosure may improve the quality of a cut surface thereof after a cutting process and strengthen the connection between components thereof by using an insulating portion arranged on the side of an active material layer. In addition, a manufacturing method and apparatus for an electrode for a secondary battery according to embodiments of the disclosure may obtain image information on an active material layer and an insulating portion applied on a current collector, and control the position of an insulating coater unit based on the obtained image information, thereby ensuring that the active material layer and the insulating portion are accurately aligned.

Although the disclosure has been described herein with reference to limited embodiments and drawings, the disclosure is not limited thereto, and it is obvious that various modifications and variations are possible within the scope of the technical idea of the disclosure and the equivalent scope of the claims to be described herein by a person having ordinary skill in the art to which the disclosure pertains.

## Claims

1. An electrode for a secondary battery, comprising:
a current collector;
an active material layer arranged on the current collector; and
an insulating portion in contact with a side of the active material layer,
wherein the insulating portion includes: a first insulating layer having a first ceramic concentration and in contact with the active material layer; and a second insulating layer having a second ceramic concentration different from the first ceramic concentration and in contact with the first insulating layer.

2. The electrode of claim 1, wherein
the second ceramic concentration is greater than the first ceramic concentration.

3. The electrode of claim 2, wherein
a width of the first insulating layer is greater than a width of the second insulating layer.

4. The electrode of claim 2 or claim 3, wherein
a thickness of the first insulating layer is less than a width of the first insulating layer.

5. The electrode of any one of claims 2 to 4, wherein
a thickness of the second insulating layer is less than a width of the second insulating layer.

6. The electrode of any one of claims 2 to 5, wherein
the second insulating layer covers one side of the first insulating layer.

7. The electrode of any one of claims 1 to 6, wherein
a thickness of the first insulating layer and a thickness of the second insulating layer are less than a thickness of the active material layer.

8. A method of manufacturing an electrode for a secondary battery, comprising:
transporting a current collector on which an active material layer is arranged; and
arranging an insulating portion in contact with a side of the active material layer,
wherein arranging the insulating portion includes: forming a first insulating layer in contact with the side of the active material layer by applying, on the current collector, a first insulating member having a first ceramic concentration; and forming a second insulating layer in contact with the first insulating layer by applying, on the current collector, a second insulating member having a second ceramic concentration different from the first ceramic concentration.

9. The method of claim 8, wherein
the second ceramic concentration is greater than the first ceramic concentration.

10. The method of claim 8 or claim 9, wherein
forming the first insulating layer includes:
obtaining active material image information on a shape of the active material layer; and
applying, based on the active material image information, the first insulating member on the current collector such that the first insulating layer comes into contact with the side of the active material layer.

11. The method of claim 10, wherein
in applying the first insulating member,
the first insulating member is applied on the current collector based on the image information of the active material such that a thickness of the first insulating layer is less than a thickness of the active material layer.

12. The method of any one of claims 8 to 11, wherein
forming the second insulating layer includes:
obtaining insulation image information on a shape of the first insulating layer; and
applying, based on the insulation image information, the second insulating member on the current collector such that the second insulating layer comes into contact with the first insulating layer.

13. The method of claim 12, wherein
in applying the second insulating member,
the second insulating member is applied on the current collector based on the insulation image information such that a width of the second insulating layer is less than a width of the first insulating layer.

14. The method of claim 12 or claim 13, wherein
in applying the second insulating member,
the second insulating member is applied on the current collector based on the insulation image information such that the second insulating layer covers one side of the first insulating layer.

15. An apparatus for manufacturing an electrode for a secondary battery, comprising:
a conveying unit configured to transport a current collector with an active material layer arranged on one side thereof in one direction;
an insulating coater unit configured to form an insulating portion in contact with a side of the active material layer on the current collector;
an active material photographing unit configured to obtain active material image information on a shape of the active material layer; and
a control unit configured to control a position of the insulating coater unit based on the active material image information such that the insulating portion comes into contact with the side of the active material layer,
wherein the insulating coater unit includes: a first insulating coater for forming a first insulating layer in contact with an edge of the active material layer by applying a first insulating member having a first ceramic concentration on the current collector; and a second insulating coater for forming a second insulating layer in contact with the first insulating layer by applying a second insulating member having a second ceramic concentration different from the first ceramic concentration on the current collector.
